# EUROPEAN PATENT APPLICATION

(11) **EP 4 700 906 A1**
(43) Date of publication of application: **25.02.2026**
(21) Application number: 23934150.6
(22) Date of filing: 12.12.2023
(51) Int. Cl.: H01M 10/52, B32B 27/18, B32B 27/30, C08K 3/00, C08L 101/00

(54) **GAS ADSORPTION SHEET FOR SECONDARY BATTERY WITH COVER FILM**

(30) Priority: 18.04.2023 JP 2023068085
(71) Applicant: NITTO DENKO CORPORATION, Ibaraki-shi, Osaka 567-8680 (JP)
(72) Inventor: KAWABE, Shigeki, Ibaraki-shi, Osaka 567-8680 (JP)
(74) Representative: Müller-Boré & Partner Patentanwälte PartG mbB
(86) International application number: PCT/JP2023/044446
(87) International publication number: WO 2024/219010

(57) **Abstract**

Provided is a gas adsorption sheet for a secondary battery, which contains gas adsorbent particles excellent in gas adsorption property, and allows the gas adsorption performance of the gas adsorbent particles to be sufficiently exhibited. A gas adsorption sheet for a secondary battery with a cover film according to an embodiment of the present invention includes: a gas adsorption sheet for a secondary battery including a heat-resistant base material, and a gas adsorption layer arranged on at least one side of the heat-resistant base material; and a cover film arranged on the gas adsorption layer on a side opposite to the heat-resistant base material. The gas adsorption layer contains: a binder resin; and gas adsorbent particles each of which is formed of an inorganic porous material having pores, and is capable of adsorbing a gas.

## Description

### Technical Field

The present invention relates to a gas adsorption sheet for a secondary battery with a cover film.

### Background Art

Hitherto, a nonaqueous secondary battery typified by a lithium-ion battery or the like has been frequently used in various fields. In the nonaqueous secondary battery using a nonaqueous electrolytic solution, a gas such as CO₂ is liable to be generated through electrolysis of a carbonic acid ester in the nonaqueous electrolytic solution, and the generation of the gas may cause, for example, deformation of a housing, an increase in internal resistance, or a reduction in safety.

Various technologies for preventing such problem as described above have been investigated. As one of the technologies, there is a proposal of a gas adsorption material that is formed of a zeolite having pores and is capable of enclosing and adsorbing a gas (Patent Literature 1). The gas adsorption material can exhibit excellent gas adsorption performance, and hence can remarkably improve the safety of the nonaqueous secondary battery. In addition, when the gas adsorption material is used, a degassing step in a production process for the secondary battery may be omitted.

However, the gas adsorption material is provided in a particulate form or a powdery form, and hence has a problem in that its handleability is poor. In addition, owing to the particulate form or the powdery form, the gas adsorption material also has a problem in that it is difficult to arrange a desired amount thereof at a desired site because of, for example, aggregation or unnecessary dispersion. In addition, there is a problem in that the gas adsorption performance of the gas adsorption material is degraded by the influence of moisture.

### Citation List

### Patent Literature

[PTL 1] JP 2015-162457 A

### Summary of Invention

### Technical Problem

The present invention has been made in order to solve the problems of the related art described above, and an object of the present invention is to provide a gas adsorption sheet for a secondary battery, which contains gas adsorbent particles excellent in gas adsorption property, and allows the gas adsorption performance of the gas adsorbent particles to be sufficiently exhibited.

### Solution to Problem

[1] According to an embodiment of the present invention, there is provided a gas adsorption sheet for a secondary battery with a cover film, including: a gas adsorption sheet for a secondary battery including a heat-resistant base material, and a gas adsorption layer arranged on at least one side of the heat-resistant base material; and a cover film arranged on the gas adsorption layer on a side opposite to the heat-resistant base material, wherein the gas adsorption layer contains: a binder resin; and gas adsorbent particles each of which is formed of an inorganic porous material having pores, and is capable of adsorbing a gas.
[2] The gas adsorption sheet for a secondary battery with a cover film according to the above-mentioned item [1] may further include an intermediate layer arranged between the heat-resistant base material and the gas adsorption layer.
[3] In the gas adsorption sheet for a secondary battery with a cover film according to the above-mentioned item [1] or [2], the gas adsorbent particles may each have a surface-treated surface treated with silicone.
[4] In the gas adsorption sheet for a secondary battery with a cover film according to the above-mentioned item [3], the silicone may have an ethoxysilane group or a methoxysilane group.
[5] In the gas adsorption sheet for a secondary battery with a cover film according to the above-mentioned item [4], the silicone may serve as a silane coupling agent having an epoxy group or an amino group.
[6] In the gas adsorption sheet for a secondary battery with a cover film according to any one of the above-mentioned items [1] to [5], the binder resin may be an acrylic resin.
[7] In the gas adsorption sheet for a secondary battery with a cover film according to the above-mentioned item [6], the binder resin may contain a constituent unit derived from a (meth)acrylic acid alkyl ester, and the (meth)acrylic acid alkyl ester may have a linear or branched alkyl group having 4 to 12 carbon atoms.
[8] In the gas adsorption sheet for a secondary battery with a cover film according to any one of the above-mentioned items [1] to [5], the binder resin may be a butyl rubber, an isoprene rubber, a polyisobutylene rubber, an ethylene propylene rubber, or a silicone-based resin.
[9] In the gas adsorption sheet for a secondary battery with a cover film according to any one of the above-mentioned items [1] to [8], a content of the gas adsorbent particles may be from 10 parts by weight to 90 parts by weight with respect to 100 parts by weight of the gas adsorption sheet for a secondary battery.
[10] In the gas adsorption sheet for a secondary battery with a cover film according to any one of the above-mentioned items [1] to [9], a material for forming the heat-resistant base material may be polyamide imide, polyetherimide, polyphenylene sulfide, polyethylene naphthalate, polyimide, or polyetheretherketone.
[11] In the gas adsorption sheet for a secondary battery with a cover film according to any one of the above-mentioned items [1] to [10], the cover film may include a base material and a pressure-sensitive adhesive layer arranged on at least one side of the base material.
[12] In the gas adsorption sheet for a secondary battery with a cover film according to the above-mentioned item [11], the pressure-sensitive adhesive layer may be formed of a pressure-sensitive adhesive containing a base polymer, and a content of a constituent unit derived from an organic acid monomer in the base polymer may be 0.5 part by weight or less with respect to 100 parts by weight of the base polymer.
[13] In the gas adsorption sheet for a secondary battery with a cover film according to any one of the above-mentioned items [1] to [12], the cover film may be peelable.

### Advantageous Effects of Invention

According to the present invention, the gas adsorption material (gas adsorption sheet) excellent in handleability can be obtained by forming the gas adsorbent particles into a sheet in combination with the heat-resistant base material. The gas adsorption sheet allows the inherent gas adsorption performance of the gas adsorbent particles to be sufficiently exhibited, and can prevent a reduction in gas adsorption performance caused by moisture.

### Brief Description of Drawings

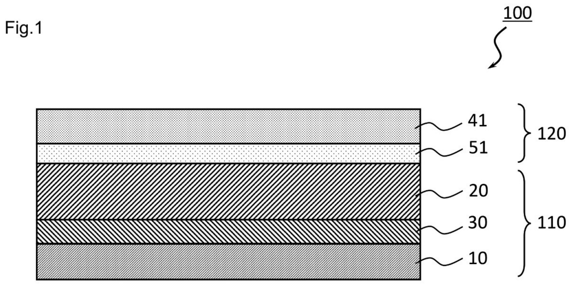

FIG. 1 is a schematic sectional view of a gas adsorption sheet for a secondary battery according to one embodiment of the present invention.

### Description of Embodiments

### A. Entire Configuration of Gas Adsorption Sheet for Secondary Battery with Cover Film

FIG. **1** is a schematic sectional view of a gas adsorption sheet for a secondary battery with a cover film (hereinafter also referred to as "gas adsorption sheet with a cover film") according to one embodiment of the present invention. A gas adsorption sheet **100** with a cover film includes: a gas adsorption sheet **110** for a secondary battery including a heat-resistant base material **10,** and a gas adsorption layer **20** arranged on at least one side of the heat-resistant base material **10;** and a cover film **120** arranged on the gas adsorption layer **20** on a side opposite to the heat-resistant base material **10.** The gas adsorption layer contains a binder resin and gas adsorbent particles. The gas adsorbent particles are each formed of an inorganic porous material having pores. The gas adsorbent particles exhibit high gas adsorption performance by virtue of their enclosing action. A gas to be adsorbed by each of the gas adsorbent particles is, for example, CO or CO₂. In one embodiment, the gas adsorption sheet **110** further includes an intermediate layer **30** between the heat-resistant base material **10** and the gas adsorption layer **20.** When an intermediate layer is formed, detachment of the gas adsorption layer can be prevented. In addition, in one embodiment, the cover film **120** includes: a base material **41;** and a pressure-sensitive adhesive layer **51** arranged on at least one side of the base material **41.** The pressure-sensitive adhesive layer **51** may be laminated so as to face the gas adsorption layer **20.** Herein, the term "gas adsorption sheet for a secondary battery with a cover film" is also simply referred to as "gas adsorption sheet with a cover film," and the term "gas adsorption sheet for a secondary battery" is also simply referred to as "gas adsorption sheet." The gas adsorption sheet with a cover film and the gas adsorption sheet may each include any appropriate other layer as long as the effect of the present invention is obtained. For example, the gas adsorption sheet may include a pressure-sensitive adhesive layer (not shown) arranged on one outer surface or each of both outer surfaces of the gas adsorption sheet.

According to the present invention, a sheet is formed by dispersing the gas adsorbent particles in the binder resin, and forming the gas adsorption layer containing the gas adsorbent particles and the binder resin. Thus, a gas adsorption sheet that can be applied to various applications with good handleability can be obtained. In addition, the presence of the heat-resistant base material makes the handleability-improving effect more remarkable. Further, the use of the heat-resistant base material as a base material allows the gas adsorption sheet to be heated (e.g., heated at 200°C for 24 hours) before the use of the gas adsorption sheet. When the gas adsorption sheet is heated before its use, unnecessary substances adhering to the gas adsorbent particles can be removed, and at the time of the use, the performance of the gas adsorbent particles can be sufficiently exhibited.

The gas adsorption sheet may be suitably used as, for example, a gas adsorption material for a nonaqueous secondary battery. Specifically, the gas adsorption sheet may be used in the form of, for example, an insulating sheet, insulating plate, or insulating tape to be arranged in a nonaqueous electrolytic solution. The gas adsorption sheet can adsorb moisture, hydrogen fluoride, and the like as well as CO and CO₂, and hence the application of the gas adsorption sheet to a battery can prolong its life. In addition, when a gas adsorption material is provided in the form of a sheet, the gas adsorption material can be applied to a battery with use of existing battery production equipment. Further, the use of the gas adsorption sheet makes it easy to arrange a desired amount of the gas adsorbent particles at a desired place.

In addition, in the present invention, when the cover film is arranged, degradation of the gas adsorption layer by moisture during storage, for example, can be prevented. When the above-mentioned configuration is adopted, the degradation (e.g., reduction in gas adsorption property) of the gas adsorption layer by moisture can be prevented even in a dry room (e.g., a dew point temperature of -50°C) or even with a gas adsorption sheet including a gas adsorption layer that is liable to be degraded by moisture.

The thickness of the gas adsorption sheet with a cover film is preferably from 15 µm to 1,100 µm, more preferably from 30 µm to 550 µm, still more preferably from 30 µm to 200 µm.

### B. Gas Adsorption Sheet

The gas adsorption sheet may have a pressure-sensitive adhesive property on one surface or each of both surfaces thereof, or may be a gas adsorption sheet having no pressure-sensitive adhesive property. Examples of the form of the gas adsorption sheet having a pressure-sensitive adhesive property include a form in which the gas adsorption layer has a pressure-sensitive adhesive property, and a form in which a pressure-sensitive adhesive layer is arranged on the outermost side of the gas adsorption sheet.

When the gas adsorption sheet has a pressure-sensitive adhesive property, the pressure-sensitive adhesive strength of the gas adsorption sheet with respect to a stainless-steel plate at 25°C is preferably from 0.1 N/20 mm to 10 N/20 mm, more preferably from 0.5 N/20 mm to 5 N/20 mm. When the pressure-sensitive adhesive strength falls within such ranges, the gas adsorption sheet can be made suitable for a battery application. Herein, the pressure-sensitive adhesive strength is a pressure-sensitive adhesive strength measured by a method in conformity with JIS Z 0237:2000, and is measured by bonding a pressure-sensitive adhesive tape to an adherend (SUS 304BA) by 1 pass back and forth with a 2 kg roller, leaving the resultant to stand under 25°C for 30 minutes, and then peeling off the pressure-sensitive adhesive tape under the conditions of a peel angle of 180° and a peel rate (tensile rate) of 300 mm/min.

The thickness of the gas adsorption sheet is preferably from 10 µm to 1,000 µm, more preferably from 20 µm to 500 µm, still more preferably from 20 µm to 150 µm, still more preferably from 20 µm to 130 µm. When the thickness falls within such ranges, a gas adsorption sheet excellent in gas adsorption performance and handleability can be obtained.

### B-1. Gas Adsorption Layer

As described above, the gas adsorption layer contains the binder resin and the gas adsorbent particles present in a dispersed state in the binder resin. In the present invention, such form is adopted, and thus the gas adsorption layer can be formed by application through use of an application liquid containing the binder resin and the gas adsorbent particles. As a result, a gas adsorption layer excellent in dispersibility of the gas adsorbent particles can be formed, and hence a gas adsorption sheet excellent in gas adsorption performance can be obtained.

The thickness of the gas adsorption layer is preferably from 5 µm to 150 µm, more preferably from 5 µm to 120 µm, still more preferably from 10 µm to 100 µm. When the thickness falls within such ranges, the gas adsorption layer can be made capable of sufficiently exhibiting the performance of the gas adsorbent particles. In addition, a gas adsorption sheet excellent in handleability can be obtained.

### (Gas Adsorbent Particles)

The gas adsorbent particles are each formed of an inorganic porous material having pores. In one embodiment, the gas adsorbent particles are each formed of a zeolite. The zeolite may be an A-type zeolite, an X-type zeolite, or an LSX-type zeolite. The zeolite is preferably an A-type zeolite in which the cationic moiety of the zeolite is ion-exchanged with Li, or an A-type zeolite in which the cationic moiety of the zeolite is ion-exchanged with Ca. A ratio (Si/Al) between Si and Al for forming each of the gas adsorbent particles is preferably from 1 to 5. When the ratio Si/Al is less than 1, the gas adsorbent particles may be structurally unstable. In addition, when the ratio Si/Al is more than 5, the adsorption performance may be reduced.

The volume-average particle diameter D50 (median diameter) of the gas adsorbent particles is preferably 50 µm or less, more preferably 20 µm or less. When the volume-average particle diameter falls within such ranges, a gas adsorption layer having a large gas adsorption amount can be formed. The volume-average particle diameter D50 (median diameter) may be measured with a laser diffraction/scattering particle diameter distribution-measuring apparatus.

The specific surface area of the gas adsorbent particles is preferably from 100 m²/g to 3,000 m²/g. When the specific surface area falls within such range, gas adsorbent particles excellent in gas adsorption performance and mechanical strength can be obtained. Such gas adsorbent particles having a large specific surface area are liable to aggregate, but according to the invention of the present application, the gas adsorption layer can be formed with good dispersibility of the gas adsorbent particles.

The gas adsorbent particles have pores. The size of each of the pores is preferably from 3 Å to 10 Å. The pores are preferably present over the entire surfaces of the gas adsorbent particles.

The CO₂ adsorption amount of the gas adsorbent particles is preferably 15 mL/g or more, more preferably 20 mL/g or more, still more preferably 30 mL/g or more. The CO₂ adsorption amount of the gas adsorbent particles means a CO₂ adsorption amount per g of the gas adsorbent particles. A measurement method for the CO₂ adsorption amount is as described below.

### <Measurement Method for CO₂ Adsorption Amount>

Under an environment of a dew point of -40°C, gas adsorbent particles are immersed in an electrolytic solution for a lithium-ion battery (composition: lithium hexafluorophosphate (1 mol/L) ethylene carbonate solution/ethyl methyl carbonate=3/7 (volume ratio)) in a predetermined sealed glass container containing 80 mL/g of the electrolytic solution per g of the gas adsorbent particles, and the glass container is stored at 60°C for 24 hours.

After that, a CO₂ concentration A in the glass container is measured by gas chromatography.

In the same manner as described above except that no gas adsorbent particles are loaded into the glass container, that is, only the electrolytic solution for a lithium-ion battery is enclosed in the glass container, and the glass container is stored at 60°C for 24 hours. Then, a CO₂ concentration B in the glass container is measured (concentration B=0.43 v/v%). From a difference between the CO₂ concentration A and the CO₂ concentration B, the gas adsorption amount of the gas adsorbent particles (gas adsorption amount per g of the gas adsorbent particles (mL/g)) is evaluated.

In one embodiment, the gas adsorbent particles each have a surface-treated surface. Surface treatment may be treatment for adjusting affinity between the gas adsorbent particles and the binder resin. When the gas adsorbent particles each having a surface-treated surface are used, a gas adsorption layer that has excellent mechanical strength and is hardly detached can be formed. The gas adsorption sheet with a cover film provided by laminating a cover film is particularly preferred because damage to the gas adsorption layer can be prevented when the cover film is peeled off for use of the gas absorption sheet. In addition, when the gas adsorbent particles each having a surface-treated surface are used, a gas adsorption sheet having excellent workability in a cutting process can be obtained. For example, when the gas adsorption sheet is punched out with a cutting die such as a Thomson blade, damage to the gas adsorption layer can be prevented. The surface-treated surface may be an entire surface or part of the surface of each of the gas adsorbent particles. Examples of the surface treatment include treatment with a silane coupling agent, treatment with an isocyanate compound, treatment with a thiol compound, treatment with an acid compound, treatment with an alcohol compound, and treatment with an epoxy compound. In one embodiment, the surface treatment may be coupling treatment. When gas adsorbent particles subjected to coupling treatment are used, a preventing effect on detachment of the gas adsorption layer and an improving effect on workability thereof become significant.

In one embodiment, gas adsorbent particles each having a surface-treated surface treated with silicone are used. In one embodiment, the silicone has an ethoxysilane group or a methoxysilane group. When such silicone is used, a gas adsorption layer that has excellent mechanical strength and is hardly detached can be formed. The silicone may serve as a silane coupling agent. The silane coupling agent preferably has an epoxy group and/or an amino group. When such silane coupling agent is used, a gas adsorption layer that has excellent mechanical strength and is hardly detached can be formed. The gas adsorbent particles, that is, the gas adsorbent particles subjected to surface treatment with silicone (a silane coupling agent) may be obtained by bringing the silane coupling agent into contact with the surface of each of the gas adsorbent particles. In this way, an organic group (e.g., a hydroxy group) present on the surface of each of the gas adsorbent particles and a silanol group formed through hydrolysis of the silane coupling agent may be caused to react with each other, or an oligomer formed through condensation of silanol groups may be bonded to the gas adsorbent particles.

Examples of the silane coupling agent include vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, a hydrochloric acid salt of N-(vinylbenzyl)-2-aminopropyltrimethoxysilane, tris-(trimethoxysilylpropyl)isocyanurate, a 3-ureidopropyltrialkoxysilane, 3-mecaptopropylmethyldimethoxysilane, 3-isocyanatopropyltriethoxysilane, and dithioltriazinepropyltriethoxysilane.

The content of the gas adsorbent particles is preferably from 10 parts by weight to 90 parts by weight, more preferably from 30 parts by weight to 80 parts by weight, still more preferably from 40 parts by weight to 70 parts by weight with respect to 100 parts by weight of the gas adsorption sheet. When the content falls within such ranges, a gas adsorption sheet excellent in gas adsorption performance and excellent in handleability can be obtained.

The content of the gas adsorbent particles is preferably from 10 parts by weight to 2,000 parts by weight, more preferably from 50 parts by weight to 1,500 parts by weight, still more preferably from 100 parts by weight to 1,000 parts by weight, particularly preferably from 280 parts by weight to 1,000 parts by weight with respect to 100 parts by weight of the binder resin for forming the gas adsorption layer. When the content falls within such ranges, a gas adsorption layer from which the gas adsorbent particles are hardly detached can be obtained. In addition, a gas adsorption sheet excellent in gas adsorption performance, handleability, and electrolytic solution resistance can be obtained.

### (Binder Resin)

Any appropriate resin is used as the binder resin as long as the effect of the present invention is obtained. Examples of the binder resin include: an acrylic resin; a rubber-based resin, such as a butyl rubber, an isoprene rubber, a polyisobutylene rubber, or an ethylene propylene rubber; a silicone-based resin; a urethane-based resin; an epoxy-based resin; an alkyd-based resin; a polyester-based resin; a melamine-based resin; a polyamide-based resin; a polyimide-based resin; an ethylene-vinyl acetate copolymer resin; and a polyvinyl alcohol-based resin. In one embodiment, an acrylic resin is preferably used as the binder resin. When an acrylic resin is used, a gas adsorption layer excellent in dispersibility of the gas adsorbent particles can be formed. In addition, when an acrylic resin is used, a gas adsorption layer that is hardly detached can be formed. In addition, a gas adsorption layer that allows the gas adsorption performance of the gas adsorbent particles to be sufficiently exhibited can be formed. In another embodiment, a butyl rubber, an isoprene rubber, a polyisobutylene rubber, an ethylene propylene rubber, or a silicone-based resin is used as the binder resin. When any such resin is used, a gas adsorption layer excellent in dispersibility of the gas adsorbent particles can be formed.

The binder resin preferably has a gas permeation property. When the binder resin having a gas permeation property is used, a gas adsorption sheet suitable for a battery application can be obtained. Examples of the resin excellent in gas permeation property include: an acrylic resin; a rubber-based resin, such as a butyl rubber, an isoprene rubber, a polyisobutylene rubber, or an ethylene propylene rubber; a silicone-based resin; a urethane-based resin; an epoxy-based resin; an alkyd-based resin; a polyester-based resin; a melamine-based resin; a polyamide-based resin; and a polyimide-based resin. The CO₂ permeability of the gas adsorption layer is preferably 1,500 cm³/m²·24 hrs·atm or more, more preferably 3,000 cm³/m²·24 hrs·atm or more. The CO₂ permeation amount of the gas adsorption layer may be measured by JIS K 7126 (equal-pressure method) under an environment having a temperature of 23°C.

The binder resin preferably shows high affinity for a nonaqueous electrolytic solution. An example of such binder resin is a resin having an SP value of from 8 cal/cm³ to 15.4 cal/cm³ (preferably from 9 cal/cm³ to 13.2 cal/cm³). In addition, the binder resin preferably has high electrolytic solution resistance against the nonaqueous electrolytic solution.

The acrylic resin is, for example, an acrylic resin containing one or two or more kinds of constituent units each derived from a (meth)acrylic acid alkyl ester. The content of the constituent unit derived from the (meth)acrylic acid alkyl ester is preferably from 50 parts by weight to 97 parts by weight, more preferably from 70 parts by weight to 94 parts by weight with respect to 100 parts by weight of the acrylic resin.

The (meth)acrylic acid alkyl ester preferably has a linear or branched alkyl group having 1 to 24 (more preferably 3 to 20, still more preferably 6 to 18) carbon atoms.

In one embodiment, the (meth)acrylic acid alkyl ester has preferably a linear or branched alkyl group having 4 to 12 carbon atoms, more preferably a linear or branched alkyl group having 6 to 12 carbon atoms. When the gas adsorption layer is formed by using an acrylic resin having such (meth)acrylic acid alkyl ester as a main constituent unit, a gas adsorption sheet whose discoloration and swelling in an electrolytic solution are suppressed can be obtained. In addition, a gas adsorption layer that is hardly detached can be formed. In one embodiment, the content of a constituent unit derived from the linear or branched alkyl group having 4 to 12 carbon atoms in the acrylic resin is preferably from 20 parts by weight to 100 parts by weight, more preferably from 30 parts by weight to 100 parts by weight, still more preferably from 50 parts by weight to 100 parts by weight, particularly preferably from 70 parts by weight to 100 parts by weight with respect to 100 parts by weight of the constituent unit derived from the (meth)acrylic acid alkyl ester.

Examples of the (meth)acrylic acid alkyl ester include methyl (meth)acrylate, ethyl (meth)acrylate, propyl (meth)acrylate, butyl (meth)acrylate, pentyl (meth)acrylate, hexyl (meth)acrylate, heptyl (meth)acrylate, octyl (meth)acrylate, nonyl (meth)acrylate, decyl (meth)acrylate, and eicosyl (meth)acrylate.

In one embodiment, a (meth)acrylic acid alkyl ester having a branched alkyl group is used as the (meth)acrylic acid alkyl ester. When the (meth)acrylic acid alkyl ester having a branched alkyl group is used, a gas adsorption layer that allows the gas adsorption performance of the gas adsorbent particles to be sufficiently exhibited can be formed. The (meth)acrylic acid alkyl ester having a linear alkyl group and the (meth)acrylic acid alkyl ester having a branched alkyl group may be used in combination. In addition, the (meth)acrylic acid alkyl ester having a branched alkyl group may be used alone as the (meth)acrylic acid alkyl ester.

In one embodiment, the content of a constituent unit derived from the (meth) acrylic acid alkyl ester having a branched alkyl group in the acrylic resin is preferably from 20 parts by weight to 100 parts by weight, more preferably from 30 parts by weight to 100 parts by weight, still more preferably from 50 parts by weight to 100 parts by weight, particularly preferably from 70 parts by weight to 100 parts by weight with respect to 100 parts by weight of the constituent unit derived from the (meth)acrylic acid alkyl ester (i.e., a total amount of 100 parts by weight of the (meth)acrylic acid alkyl ester having a linear alkyl group (including methyl (meth)acrylate and ethyl (meth)acrylate) and the (meth)acrylic acid alkyl ester having a branched alkyl group). When the content falls within such ranges, a gas adsorption sheet particularly excellent in electrolytic solution resistance can be obtained.

Examples of the (meth)acrylic acid alkyl ester having a branched alkyl group include isobutyl (meth)acrylate, s-butyl (meth)acrylate, t-butyl (meth)acrylate, 2-ethylhexyl (meth)acrylate, isooctyl (meth)acrylate, isononyl (meth)acrylate, isodecyl (meth)acrylate, stearyl (meth)acrylate, 2-ethylbutyl (meth)acrylate, and 2-methylbutyl (meth)acrylate. Of those, 2-ethylhexyl (meth)acrylate is preferred.

The acrylic resin may contain a constituent unit derived from another monomer copolymerizable with the (meth)acrylic acid alkyl ester as required for the purpose of modifying cohesive strength, heat resistance, cross-linkability, or the like. Examples of such other monomer include: carboxyl group-containing monomers, such as (meth)acrylic acid, carboxyethyl acrylate, carboxypentyl acrylate, itaconic acid, maleic acid, fumaric acid, and crotonic acid; acid anhydride group-containing monomers, such as maleic anhydride and itaconic anhydride; phosphoric acid group-containing monomers such as 2-hydroxyethylacryloyl phosphate; sulfonic acid group-containing monomers, such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; hydroxyl group-containing monomers, such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl methacrylate; (N-substituted) amide-based monomers, such as (meth)acrylamide, N,N-dimethyl(meth)acrylamide, N-butyl(meth)acrylamide, N-methylol(meth)acrylamide, and N-methylolpropane(meth)acrylamide; aminoalkyl (meth)acrylate-based monomers, such as aminoethyl (meth)acrylate, N,N-dimethylaminoethyl (meth)acrylate, and t-butylaminoethyl (meth)acrylate; alkoxyalkyl (meth)acrylate-based monomers, such as methoxyethyl (meth)acrylate and ethoxyethyl (meth)acrylate; maleimide-based monomers, such as N-cyclohexylmaleimide, N-isopropylmaleimide, N-laurylmaleimide, and N-phenylmaleimide; itaconimide-based monomers, such as N-methylitaconimide, N-ethylitaconimide, N-butylitaconimide, N-octylitaconimide, N-2-ethylhexylitaconimide, N-cyclohexylitaconimide, and N-laurylitaconimide; succinimide-based monomers, such as N-(meth)acryloyloxymethylenesuccinimide, N-(meth)acryloyl-6-oxyhexamethylenesuccinimide, and N-(meth)acryloyl-8-oxyoctamethylenesuccinimide; vinyl-based monomers, such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, and N-vinylcaprolactam; cyanoacrylate monomers, such as acrylonitrile and methacrylonitrile; epoxy group-containing acrylic monomers such as glycidyl (meth)acrylate; glycol-based acrylic ester monomers, such as polyethylene glycol (meth)acrylate, polypropylene glycol (meth)acrylate, methoxyethylene glycol (meth)acrylate, and methoxypolypropylene glycol (meth)acrylate; acrylic acid ester-based monomers each having a heterocycle, a halogen atom, or a silicon atom, such as tetrahydrofurfuryl (meth)acrylate, fluorinated (meth)acrylate, and silicone (meth)acrylate; polyfunctional monomers, such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, and urethane acrylate; olefin-based monomers, such as isoprene, butadiene, and isobutylene; and vinyl ether-based monomers such as vinyl ether. Those monomer components may be used alone or in combination thereof.

The content of the constituent unit derived from the other monomer is preferably 20 parts by weight or less, more preferably 15 parts by weight or less, still more preferably from 1 part by weight to 10 parts by weight with respect to 100 parts by weight of the acrylic resin.

The weight-average molecular weight of the acrylic resin is preferably from 300,000 to 2,000,000, more preferably from 500,000 to 1,500,000. The weight-average molecular weight may be measured by GPC (solvent: THF).

### (Additive)

The gas adsorption layer may contain any appropriate additive as required. Examples of the additive include a cross-linking agent, a tackifier (e.g., a rosin-based tackifier, a terpene-based tackifier, or a hydrocarbon-based tackifier), a plasticizer (e.g., a trimellitic acid ester-based plasticizer or a pyromellitic acid ester-based plasticizer), a pigment, a dye, an age resistor, a conductive material, an antistatic agent, a light stabilizer, a release modifier, a softening agent, a surfactant, a flame retardant, an antioxidant, a UV absorber, and particles.

### B-2. Heat-resistant Base Material

Herein, the term "heat-resistant base material" means a base material capable of withstanding heating under an atmosphere having a temperature of 150°C and a pressure of from -100 kPa to 0 kPa for 24 hours (preferably under an atmosphere having a temperature of 200°C and a pressure of from -100 kPa to 0 kPa for 24 hours), specifically a base material having a dimensional change of 5% or less even when heated under an atmosphere having a temperature of 150°C and a pressure of -100 kPa for 24 hours (preferably under an atmosphere having a temperature of 200°C and a pressure of -100 kPa for 24 hours). In addition, when the heat-resistant base material is formed of a resin, the heat-resistant base material means a base material formed of a resin having a glass transition temperature of 80°C or more (preferably 100°C or more, more preferably 150°C or more) . The term "glass transition temperature" means a temperature at which the resin shows the peak of a loss tangent (tanδ) found under the conditions of a temperature increase rate of 5°C/min, a sample width of 5 mm, a chuck-to-chuck distance of 20 mm, and a frequency of 10 Hz in a DMA method (tensile method).

Any appropriate material may be adopted as a material for forming the heat-resistant base material as long as the effect of the present invention is obtained. The heat-resistant base material is preferably formed of a resin. Examples of the material for forming the heat-resistant base material include polyamide imide (PAI), polyetherimide (PEI), polyphenylene sulfide (PPS), polyethylene naphthalate (PEN), polyimide (PI), and polyetheretherketone (PEEK). Those resins are each excellent in heat resistance and excellent in electrolytic solution resistance.

The thickness of the heat-resistant base material is preferably from 5 µm to 500 µm, more preferably from 10 µm to 300 µm, still more preferably from 15 µm to 100 µm. When the thickness falls within such ranges, a gas adsorption sheet particularly excellent in handleability can be obtained.

### B-3. Intermediate Layer

The intermediate layer contains any appropriate resin. Examples of the resin for forming the intermediate layer include an acrylic resin, a rubber-based resin, and a silicone-based resin. Of those, an acrylic resin may be preferably used. In addition, an active energy ray-curable acrylic resin may be used as a pressure-sensitive adhesive. Examples of the resin for forming the intermediate layer include the binder resins described above. In one embodiment, the same resin as the binder resin for forming the gas adsorption layer is used as the resin for forming the intermediate layer. The intermediate layer is free of gas adsorbent particles.

When the intermediate layer is formed, a gas adsorption sheet from which a gas adsorption layer is hardly detached can be obtained.

The thickness of the intermediate layer is preferably from 1 µm to 50 µm, more preferably from 2 µm to 30 µm, still more preferably from 2 µm to 20 µm.

The intermediate layer may contain any appropriate additive as required. Examples of the additive include a cross-linking agent, a tackifier, a plasticizer (e.g., a trimellitic acid ester-based plasticizer or a pyromellitic acid ester-based plasticizer), a pigment, a dye, a filler, an age resistor, a conductive agent, a UV absorber, a light stabilizer, a release modifier, a softening agent, a surfactant, a flame retardant, an antioxidant, and a solvent.

### C. Cover Film

In one embodiment, the cover film includes: a base material; and a pressure-sensitive adhesive layer arranged on at least one side of the base material.

In one embodiment, the cover film is arranged to be peelable. In one embodiment, the cover film can be peeled off from the gas adsorption sheet after heat drying at 110°C for 3 hours. The peelability of such cover film may be controlled by, for example, adjusting the pressure-sensitive adhesive strength of the cover film with the composition and the like of the pressure-sensitive adhesive layer.

The pressure-sensitive adhesive strength of the cover film with respect to a stainless-steel plate at 25°C is preferably from 0.05 N/20 mm to 5 N/20 mm, more preferably from 0.1 N/20 mm to 3 N/20 mm, more preferably from 0.15 N/20 mm to 2 N/20 mm, still more preferably from 0.15 N/20 mm to 1 N/20 mm.

When the gas adsorption sheet with a cover film is dried under a reduced pressure of -100 kPa at 110°C for 3 hours and then the cover film is peeled off from the gas adsorption sheet, the peel strength of the cover film is preferably from 0.01 N/50 mm to 5 N/50 mm, more preferably from 0.02 N/50 mm to 3 N/50 mm, still more preferably from 0.05 N/50 mm to 2.5 N/50 mm. When the peel strength falls within such ranges, a cover film that can prevent damage to the gas adsorption layer and is peelable can be obtained. The peel strength may be measured by a method in conformity with JIS Z 0237:2000. That is, the peel strength is measured by peeling off the cover film of the gas adsorption sheet with a cover film from the gas adsorption sheet under the conditions of a measurement temperature of 25°C, a peel angle of 180°, and a peel rate (tensile rate) of 300 mm/min.

### C-1. Base Material

The base material may be formed of any appropriate material. For example, various sheet-shaped products, such as a resin film, paper, a cloth, a nonwoven fabric, metal foil, plastic laminates thereof, and a laminate of plastic products, may each be used as the base material. Of those, a resin film is most preferred from the viewpoints of handleability and cost. A material for forming the resin film may be selected as required from the viewpoints of strength, heat resistance, and the like. Examples thereof include: olefin-based resins each containing an α-olefin as a monomer component, such as polyethylene (PE), polypropylene (PP), an ethylene-propylene copolymer, and an ethylene-vinyl acetate copolymer (EVA); polyesters, such as polyethylene terephthalate (PET), polyethylene naphthalate (PEN), and polybutylene terephthalate (PBT); polyvinyl chloride (PVC); polyphenylene sulfide (PPS); amide-based resins, such as polyamide (nylon) and wholly aromatic polyamide (aramid); and polyetheretherketone (PEEK), polyimide, polyetherimide, polystyrene, and an acrylic resin. Those materials may be used alone or in combination thereof. In addition, any one of an unstretched film, a uniaxially stretched film, and a biaxially stretched film may be used as a plastic film. In addition, such film may be a laminate film formed of two or more film layers, or a film having a lubricant such as inactive particles appropriately added may be used from the viewpoint of handleability.

The thickness of the base material is preferably 200 µm or less, more preferably from 1 µm to 200 µm, still more preferably from 5 µm to 100 µm, particularly preferably from 10 µm to 100 µm, particularly preferably from 20 µm to 100 µm, most preferably from 30 µm to 100 µm. When the thickness falls within such ranges, a gas adsorption sheet with a cover film that is prevented from lifting when formed into a roll shape and that has excellent workability can be obtained.

The moisture permeability of the base material is preferably 500 g/m²·24 hr or less, more preferably 100 g/m²·24 hr or less. The moisture permeability may be determined in conformity with JIS Z 0208, "Determination of the Water Vapour Transmission Rate (Dish Method)."

The base material may be subjected to surface treatment. Examples of the surface treatment include corona treatment, chromic acid treatment, ozone exposure, flame exposure, high-voltage discharge exposure, ionizing radiation treatment, and coating treatment with an undercoating agent.

### C-2. Pressure-sensitive Adhesive Layer

The thickness of the pressure-sensitive adhesive layer is preferably 30 µm or less, more preferably 20 µm or less, still more preferably 10 µm or less. The lower limit of the thickness of the pressure-sensitive adhesive layer is, for example, 1 µm (preferably 0.5 µm).

The pressure-sensitive adhesive layer includes any appropriate pressure-sensitive adhesive. Any appropriate pressure-sensitive adhesive may be used as the pressure-sensitive adhesive as long as the effect of the present invention is obtained. For example, a pressure-sensitive adhesive having pressure sensitivity may be used as the pressure-sensitive adhesive.

Examples of the pressure-sensitive adhesive having pressure sensitivity include an acrylic pressure-sensitive adhesive, a rubber-based pressure-sensitive adhesive, a vinyl alkyl ether-based pressure-sensitive adhesive, a silicone-based pressure-sensitive adhesive, a polyester-based pressure-sensitive adhesive, a polyamide-based pressure-sensitive adhesive, a urethane-based pressure-sensitive adhesive, and a styrene-diene block copolymer-based pressure-sensitive adhesive. Of those, an acrylic pressure-sensitive adhesive or a rubber-based pressure-sensitive adhesive is preferred, and an acrylic pressure-sensitive adhesive is more preferred. The pressure-sensitive adhesives may be used alone or in combination thereof. In one embodiment, a pressure-sensitive adhesive containing a base polymer having an aromatic ring and/or a double bond is used from the viewpoint of UV absorption. From such viewpoint as well, an acrylic pressure-sensitive adhesive may be preferably used.

An example of the acrylic pressure-sensitive adhesive is an acrylic pressure-sensitive adhesive containing, as a base polymer, an acrylic polymer (homopolymer or copolymer) using one or two or more kinds of (meth)acrylic acid alkyl esters as monomer components. Specific examples of the (meth)acrylic acid alkyl ester include (meth)acrylic acid C1-20 alkyl esters, such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Of those, a (meth)acrylic acid alkyl ester having a linear or branched alkyl group having 4 to 18 carbon atoms may be preferably used.

The acrylic polymer may contain a unit corresponding to any other monomer component copolymerizable with the (meth)acrylic acid alkyl ester as required for the purpose of modifying, for example, cohesive strength, heat resistance, and cross-linkability. Examples of such monomer component include: carboxyl group-containing monomers, such as acrylic acid, methacrylic acid, carboxyethyl acrylate, carboxypentyl acrylate, itaconic acid, maleic acid, fumaric acid, and crotonic acid; acid anhydride monomers, such as maleic anhydride and itaconic anhydride; hydroxyl group-containing monomers, such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl methacrylate; sulfonic acid group-containing monomers, such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; (N-substituted) amide-based monomers, such as (meth)acrylamide, N,N-dimethyl(meth)acrylamide, N-butyl(meth)acrylamide, N-methylol(meth)acrylamide, and N-methylolpropane(meth)acrylamide; aminoalkyl (meth)acrylate-based monomers, such as aminoethyl (meth)acrylate, N,N-dimethylaminoethyl (meth)acrylate, and t-butylaminoethyl (meth)acrylate; alkoxyalkyl (meth)acrylate-based monomers, such as methoxyethyl (meth)acrylate and ethoxyethyl (meth)acrylate; maleimide-based monomers, such as N-cyclohexylmaleimide, N-isopropylmaleimide, N-laurylmaleimide, and N-phenylmaleimide; itaconimide-based monomers, such as N-methylitaconimide, N-ethylitaconimide, N-butylitaconimide, N-octylitaconimide, N-2-ethylhexylitaconimide, N-cyclohexylitaconimide, and N-laurylitaconimide; succinimide-based monomers, such as N-(meth)acryloyloxymethylenesuccinimide, N-(meth)acryloyl-6-oxyhexamethylenesuccinimide, and N-(meth)acryloyl-8-oxyoctamethylenesuccinimide; vinyl-based monomers, such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, and N-vinylcaprolactam; cyano acrylate monomers, such as acrylonitrile and methacrylonitrile; epoxy group-containing acrylic monomers such as glycidyl (meth)acrylate; glycol-based acrylic ester monomers, such as polyethylene glycol (meth)acrylate, polypropylene glycol (meth)acrylate, methoxyethylene glycol (meth)acrylate, and methoxypolypropylene glycol (meth)acrylate; acrylic acid ester-based monomers each having a heterocycle, a halogen atom, or a silicon atom, such as tetrahydrofurfuryl (meth)acrylate, fluorinated (meth)acrylate, and silicone (meth)acrylate; polyfunctional monomers, such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa (meth) acrylate, epoxy acrylate, polyester acrylate, and urethane acrylate; olefin-based monomers, such as isoprene, butadiene, and isobutylene; and vinyl ether-based monomers such as vinyl ether. Those monomer components may be used alone or in combination thereof.

In one embodiment, the content of a constituent unit derived from an organic acid monomer (e.g., a (meth)acrylic acid group-containing monomer or a carboxyl group-containing monomer) in a base polymer (e.g., an acrylic polymer) is preferably 0.5 part by weight or less, more preferably 0.3 part by weight or less with respect to 100 parts by weight of the base polymer. When the content falls within such ranges, a cover film that hardly breaks the gas adsorption layer of the gas adsorption sheet when peeled off from the gas adsorption sheet can be obtained. In particular, when gas adsorbent particles each subjected to surface treatment (preferably, coupling treatment) are used, such effect becomes significant. In one embodiment, an acrylic polymer free of a constituent unit derived from an organic acid monomer is used.

In one embodiment, the content of a constituent unit derived from a nitrogen-containing monomer in a base polymer (e.g., an acrylic polymer) is preferably 20 parts by weight or less, more preferably 15 parts by weight or less with respect to 100 parts by weight of the base polymer. When the content falls within such ranges, a cover film that hardly breaks the gas adsorption layer of the gas adsorption sheet when peeled off from the gas adsorption sheet can be obtained.

The pressure-sensitive adhesive having pressure sensitivity may contain any appropriate additive as required. Examples of the additive include a cross-linking agent, a tackifier (e.g., a rosin-based tackifier, a terpene-based tackifier, or a hydrocarbon-based tackifier), a plasticizer (e.g., a trimellitic acid ester-based plasticizer or a pyromellitic acid ester-based plasticizer), a pigment, a dye, an age resistor, a conductive material, an antistatic agent, a light stabilizer, a release modifier, a softening agent, a surfactant, a flame retardant, an antioxidant, a UV absorber, and particles.

Examples of the cross-linking agent include an isocyanate-based cross-linking agent, an epoxy-based cross-linking agent, a melamine-based cross-linking agent, and a peroxide-based cross-linking agent, and also include a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, an isocyanate-based cross-linking agent or an epoxy-based cross-linking agent is preferred. In one embodiment, a cross-linking agent (e.g., an aromatic isocyanate-based cross-linking agent) having an aromatic ring and/or a double bond is used from the viewpoint of UV absorption.

Specific examples of the isocyanate-based cross-linking agent include: lower aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic isocyanates, such as 2,4-tolylene diisocyanate, 4,4'-diphenylmethane diisocyanate, and xylylene diisocyanate; and isocyanate adducts, such as a trimethylolpropane/tolylene diisocyanate trimer adduct (manufactured by Tosoh Corporation, product name: "Coronate L"), a trimethylolpropane/hexamethylene diisocyanate trimer adduct (manufactured by Tosoh Corporation, product name: "Coronate HL"), and an isocyanurate form of hexamethylene diisocyanate (manufactured by Tosoh Corporation, product name: "Coronate HX"). The content of the isocyanate-based cross-linking agent may be set to any appropriate amount in accordance with the desired pressure-sensitive adhesive strength, and is typically from 0.1 part by weight to 20 parts by weight, more preferably from 0.5 part by weight to 10 parts by weight with respect to 100 parts by weight of the base polymer.

Examples of the epoxy-based cross-linking agent include N,N,N',N'-tetraglycidyl-m-xylenediamine, diglycidyl aniline, 1,3-bis(N,N-glycidylaminomethyl)cyclohexane (manufactured by Mitsubishi Gas Chemical Company, Inc., product name: "TETRAD-C"), 1,6-hexanediol diglycidyl ether (manufactured by Kyoeisha Chemical Co., Ltd., product name: "Epolight 1600"), neopentyl glycol diglycidyl ether (manufactured by Kyoeisha Chemical Co., Ltd., product name: "Epolight 1500NP"), ethylene glycol diglycidyl ether (manufactured by Kyoeisha Chemical Co., Ltd., product name: "Epolight 40E"), propylene glycol diglycidyl ether (manufactured by Kyoeisha Chemical Co., Ltd., product name: "Epolight 70P"), polyethylene glycol diglycidyl ether (manufactured by Nippon Oil & Fats Co., Ltd., product name: "EPIOL E-400"), polypropylene glycol diglycidyl ether (manufactured by Nippon Oil & Fats Co., Ltd., product name: "EPIOL P-200"), sorbitol polyglycidyl ether (manufactured by Nagase ChemteX Corporation, product name: "DENACOL EX-611"), glycerol polyglycidyl ether (manufactured by Nagase ChemteX Corporation, product name: "DENACOL EX-314"), pentaerythritol polyglycidyl ether, polyglycerol polyglycidyl ether (manufactured by Nagase ChemteX Corporation, product name: "DENACOL EX-512"), sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcin diglycidyl ether, bisphenol-S-diglycidyl ether, and an epoxy-based resin having two or more epoxy groups in a molecule thereof. The content of the epoxy-based cross-linking agent may be set to any appropriate amount in accordance with the desired pressure-sensitive adhesive strength, and is typically from 0.01 part by weight to 10 parts by weight, more preferably from 0.03 part by weight to 5 parts by weight with respect to 100 parts by weight of the base polymer.

Examples of the tackifier include a rosin-based resin (e.g., a rosin ester resin), a terpene-based resin (e.g., a terpene phenol copolymer (terpene-modified phenol resin), or a hydrogenated terpene resin), a coumarone indene-based resin, an alicyclic saturated hydrocarbon-based resin, a petroleum-based resin (e.g., a hydrocarbon-based petroleum resin, such as an aliphatic/aromatic copolymer-based petroleum resin or an aromatic-based petroleum resin), and a phenol-based resin. In one embodiment, a tackifier (e.g., a rosin-based resin) having an aromatic ring and/or a double bond is used from the viewpoint of UV absorption. The content of the tackifier may be set to any appropriate amount in accordance with the desired pressure-sensitive adhesive strength, and is typically from 1 part by weight to 50 parts by weight, more preferably from 10 parts by weight to 30 parts by weight with respect to 100 parts by weight of the base polymer.

### D. Production Method for Gas Adsorption Sheet

The gas adsorption sheet may be produced by any appropriate method. In one embodiment, the gas adsorption sheet is produced by applying a composition for gas adsorption layer formation containing the binder resin and the gas adsorbent particles onto the heat-resistant base material, and by drying the composition. When the gas adsorption layer is formed by application, a gas adsorption sheet excellent in dispersibility of the gas adsorbent particles and excellent in gas adsorption performance can be obtained. When the gas adsorption sheet includes an intermediate layer, the gas adsorption sheet may be produced by forming an intermediate layer through application of a composition for intermediate layer formation onto a heat-resistant base material, and then forming a gas adsorption layer.

The composition for gas adsorption layer formation may further contain any appropriate additive in addition to the binder resin and the gas adsorbent particles. Alternatively, the composition for intermediate layer formation may further contain any appropriate additive in addition to the above-mentioned resin. Examples of the additive include a cross-linking agent, a tackifier, a plasticizer (e.g., a trimellitic acid ester-based plasticizer or a pyromellitic acid ester-based plasticizer), a pigment, a dye, a filler, an age resistor, a conductive agent, a UV absorber, a light stabilizer, a release modifier, a softener, a surfactant, a flame retardant, and an antioxidant. Examples of the cross-linking agent include an isocyanate-based cross-linking agent, an epoxy-based cross-linking agent, a melamine-based cross-linking agent, and a peroxide-based cross-linking agent, and also include a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, an isocyanate-based cross-linking agent or an epoxy-based cross-linking agent is preferred. In addition, the composition for gas adsorption layer formation may contain a solvent, such as toluene or ethyl acetate.

Examples of an application method for each of the composition for gas adsorption layer formation and the composition for intermediate layer formation include: coating methods, such as air doctor coating, blade coating, knife coating, reverse coating, transfer roll coating, gravure roll coating, kiss coating, cast coating, spray coating, slot orifice coating, calender coating, electrodeposition coating, dip coating, and die coating; and printing methods, such as a relief printing method, for example, flexo printing, an intaglio printing method, for example, a direct gravure printing method or an offset gravure printing method, a planographic printing method, for example, an offset printing method, and a stencil printing method, for example, a screen printing method.

The gas adsorption sheet with a cover film may be obtained by laminating a cover film on a gas adsorption layer of a gas adsorption sheet by any appropriate method. The cover film may be obtained by applying the pressure-sensitive adhesive onto the base material by any appropriate method.

### Examples

The present invention is specifically described below by way of Examples. However, the present invention is by no means limited to these Examples. Evaluation methods in Examples are as described below. In addition, in Examples, the terms "part(s)" and "%" are by weight unless otherwise stated.

### [Production Example 1] Production Method for Cover Film A

A four-necked flask with a stirring blade, a temperature gauge, a nitrogen gas inlet tube, and a condenser was loaded with monomers (2-ethylhexyl acrylate/ethyl acrylate/methyl methacrylate/hydroxyethyl acrylate=30 parts by weight/70 parts by weight/5 parts by weight/4 parts by weight), 0.2 part by weight of benzoyl peroxide serving as a polymerization initiator, and 244 parts by weight of toluene. While the contents were gently stirred, a nitrogen gas was introduced, and a polymerization reaction was performed for about 6 hours with the liquid temperature in the flask being kept around 60°C to provide a resin composition A containing an acrylic copolymer A.

To the resultant resin composition A containing 100 parts by weight of the acrylic copolymer A, 3 parts by weight of an isocyanate-based cross-linking agent (manufactured by Mitsui Chemicals, Inc., product name: "TAKENATE D-101E") and ethyl acetate were added to prepare a 15%-base pressure-sensitive adhesive A. The pressure-sensitive adhesive A was applied onto a base material (polyester film, manufactured by Toray Industries, Inc., product name: "Lumirror S10") having a thickness of 75 µm so that a pressure-sensitive adhesive layer had a thickness of 10 µm after drying. Thus, a cover film A (base material/pressure-sensitive adhesive layer A) was obtained.

### [Production Example 2] Production Method for Cover Films B to Q

Cover films B to Q were each obtained in the same manner as in Production Example 1 except that: the base material shown in Table 1 was used; the monomers shown in Table 1 were used as material monomers for an acrylic copolymer instead of <2-ethylhexyl acrylate/ethyl acrylate/methyl methacrylate/hydroxyethyl acrylate=30 parts by weight/70 parts by weight/5 parts by weight/4 parts by weight>; the kind and blending amount of the cross-linking agent were set as shown in Table 1; and the thickness of the pressure-sensitive adhesive layer was set as shown in Table 1.

Details of the components are as described below.

### (Monomer)

2EHA: 2-ethylhexyl acrylate
EA: ethyl acrylate
MMA: methyl methacrylate
HEA: hydroxyethyl acrylate
BA: butyl acrylate
4HBA: 4-hydroxybutyl acrylate
AA: acrylic acid
NVP: N-vinylpyrrolidone

### (Base Material)

TORAYFAN BO: polypropylene film
Lumirror S1N: polyester film

### (Cross-linking Agent)

TETRAD-C: epoxy-based cross-linking agent, manufactured by Mitsubishi Gas Chemical Company, Inc., product name: "TETRAD-C"

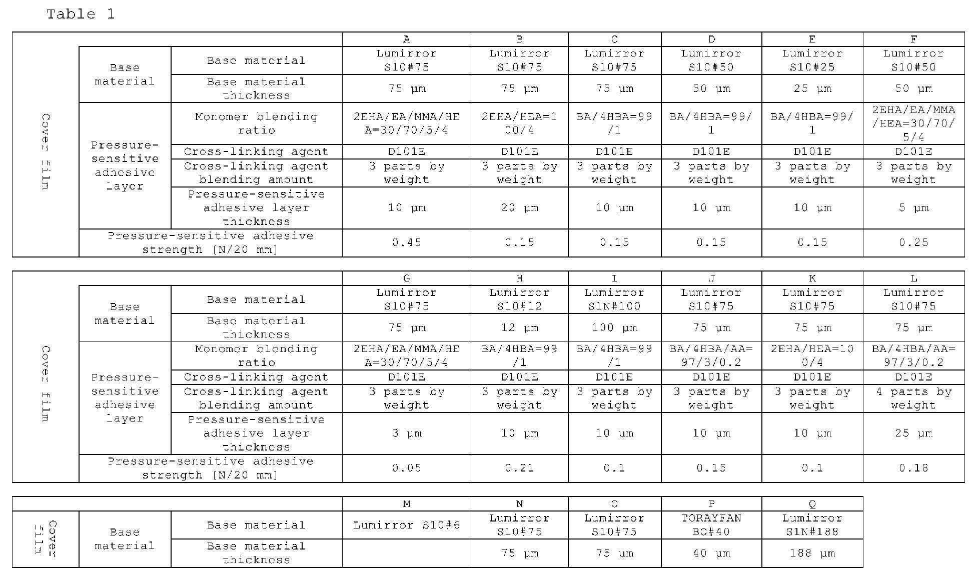

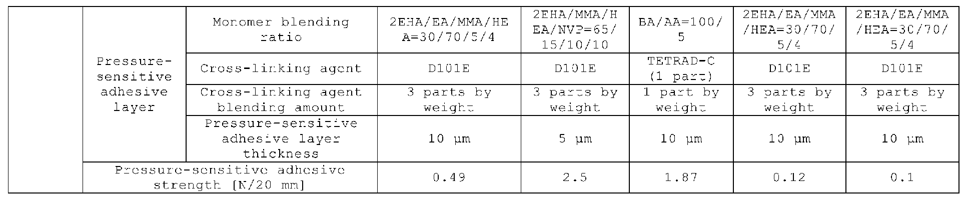

### [Example 1]

A four-necked flask with a stirring blade, a temperature gauge, a nitrogen gas inlet tube, and a condenser was loaded with 100 parts by weight of gas adsorbent particles (manufactured by Union Showa K.K., product name: "Molecular Sieve 3A-B, powder"), 4 parts by weight of a silane coupling agent (manufactured by Shin-Etsu Chemical Co., Ltd., product name: "KBM-4803"), 150 parts by weight of tetrahydrofuran, and 1.3 parts by weight of distilled water. While the contents were gently stirred, a nitrogen gas was introduced, and a coupling reaction was performed for about 6 hours with the liquid temperature in the flask being kept around 60°C to provide gas adsorbent particles (1) subjected to surface treatment.

A four-necked flask with a stirring blade, a temperature gauge, a nitrogen gas inlet tube, and a condenser was loaded with 2-ethylhexyl acrylate/acrylic acid (95 parts by weight/5 parts by weight), 0.2 part by weight of a polymerization initiator (benzoyl peroxide), and 120 parts by weight of ethyl acetate. While the contents were gently stirred, a nitrogen gas was introduced, and a polymerization reaction was performed for about 6 hours with the liquid temperature in the flask being kept around 60°C to provide a resin composition (1) containing an acrylic copolymer (1).

To the resin composition (1) containing 100 parts by weight of the acrylic copolymer (1), 3 parts by weight of an isocyanate-based cross-linking agent (manufactured by Mitsui Chemicals, Inc., product name: "TAKENATE D-101E") and ethyl acetate were added to prepare a 18%-base composition (1) for intermediate layer formation.

The resultant composition (1) for intermediate layer formation was applied onto a heat-resistant base material (polyimide film, manufactured by Du Pont-Toray Co., Ltd., product name: "Kapton 100H", thickness: 25 µm) so as to have a thickness of 10 µm after drying. Thus, a heat-resistant base material (1) with an intermediate layer was obtained.

To the resin composition (1) containing 100 parts by weight of the acrylic copolymer(1), 1 part by weight of an epoxy-based cross-linking agent (manufactured by Mitsubishi Gas Chemical Company, Inc., product name: "TETRAD-C"), ethyl acetate, and 900 parts by weight of the gas adsorbent particles (1) were added to prepare a 50%-base composition (1) for gas adsorption layer formation.

The resultant composition (1) for gas adsorption layer formation was applied onto a release-treated film (manufactured by FUJIKO Co., Ltd., product name: "CAO", thickness: 75 µm) so as to have a thickness of 80 µm after drying. Thus, a gas adsorption layer (1) was obtained.

The resultant gas adsorption layer (1) was transferred to an intermediate layer formed of the composition (1) for intermediate layer formation. Thus, a gas adsorption sheet (1) was obtained.

The cover film A was laminated on the gas adsorption sheet (1) so that the gas adsorption layer (1) and the pressure-sensitive adhesive layer A faced each other. Thus, a gas adsorption sheet with a cover was obtained.

### [Examples 2 to 19, and Comparative Examples 1 to 3]

Each gas adsorption sheet with a cover film was obtained in the same manner as in Example 1 except that: the kind and blending amount of the coupling agent used in preparation of the gas adsorbent particles were set as shown in Table 2; the thickness of the intermediate layer was set as shown in Table 2; the kind and blending amount of the cross-linking agent to be added to the gas adsorption layer were set as shown in Table 2; and the cover film shown in Table 2 was used.

In each of Comparative Examples, a pressure-sensitive adhesive sheet was obtained without lamination of a cover film, and the pressure-sensitive adhesive sheet was subjected to evaluations described below. Further, in Comparative Example 1, a heat-resistant base material (polyimide film, manufactured by Du Pont-Toray Co., Ltd., product name: "Kapton 100H", thickness: 25 µm) was used instead of the heat-resistant base material with an intermediate layer, and the composition for gas adsorption layer formation was applied to the heat-resistant base material. Thus, a gas adsorption sheet was obtained.

Details of the components are as described below.

### (Coupling Agent)

KBM903: manufactured by Shin-Etsu Chemical Co., Ltd., product name: "KBM903"
KBM3033: manufactured by Shin-Etsu Chemical Co., Ltd., product name: "KBM3033"
KBM13: manufactured by Shin-Etsu Chemical Co., Ltd., product name: "KBM13"
KBM403: manufactured by Shin-Etsu Chemical Co., Ltd., product name: "KBM403"

**Table 2**

| | | | Example 1 | Example 2 | Example 3 | Example 4 | Example 5 | Example 6 | Example 7 |
|---|---|---|---|---|---|---|---|---|---|
| | Gas adsorpti on layer | Polymer | 2EHA/AA=9 5/5 | 2EHA/AA=9 5/5 | 2EHA/AA=9 5/5 | 2EHA/AA=9 5/5 | 2EHA/AA=9 5/5 | 2EHA/AA=9 5/5 | 2EHA/AA=9 5/5 |
| | | Cross-linking agent | TETRAD-C | TETRAD-C | TETRAD-C | TETRAD-C | TETRAD-C | TETRAD-C | TETRAD-C |
| | | Cross-linking agent blending amount | 1 part by weight | 1 part by weight | 1 part by weight | 1 part by weight | 1 part by weight | 1 part by weight | 1 part by weight |
| | | Particles | Molecular Sieve 3A-B | Molecular Sieve 3A-B | Molecular Sieve 3A-B | Molecular Sieve 3A-B | Molecular Sieve 3A-B | Molecular Sieve 3A-B | Molecular Sieve 3A-B |
| | | Particle blending amount | 900 parts by weight | 900 parts by weight | 900 parts by weight | 900 parts by weight | 900 parts by weight | 900 parts by weight | 900 parts by weight |
| | | Particle surface treatment (coupling agent) | KBM4803 | KBM4803 | KBM4803 | KBM903 | KBM3033 | KBM13 | KBM403 |
| Gas adsorption sheet | | Coupling agent blending amount | 4 wt% | 1 wt% | 6 wt% | 1 wt% | 1 wt% | 1 wt% | 1 wt% |
| | | Gas adsorption layer thickness | 80 µm | 80 µm | 80 µm | 80 µm | 80 µm | 80 µm | 80 µm |
| | Intermed iate layer | Polymer | 2EHA/AA=9 5/5 | 2EHA/AA=9 5/5 | 2EHA/AA=9 5/5 | 2EHA/AA=9 5/5 | 2EHA/AA=9 5/5 | 2EHA/AA=9 5/5 | 2EHA/AA=9 5/5 |
| | | Cross-linking agent | D101E | D101E | D101E | D101E | D101E | D101E | D101E |
| | | Cross-linking agent blending amount | 3 parts by weight | 3 parts by weight | 3 parts by weight | 3 parts by weight | 3 parts by weight | 3 parts by weight | 3 parts by weight |
| | | Intermediate layer thickness | 10 µm | 10 µm | 10 µm | 10 µm | 10 µm | 10 µm | 10 µm |
| | Heat-resistant base material | | Kapton 100H | Kapton 100H | Kapton 100H | Kapton 100H | Kapton 100H | Kapton 100H | Kapton 100H |
| | Gas adsorption layer strength [N/19 mm] | | 3.6 | 2.5 | 3.8 | 1.2 | 1.2 | 1.0 | 2.0 |
| | Gas adsorption layer adhesiveness | | ○ | ○ | ○ | ○ | ○ | ○ | ○ |
| Cover film | | | A | B | C | D | E | F | G |
| Evaluation | Handleability | | ○ | ○ | ○ | ○ | ○ | ○ | ○ |
| | Heat resistance (cover film) | | ○ | ○ | ○ | ○ | ○ | ○ | ○ |
| | Workability | | ○ | ○ | ○ | ○ | ○ | ○ | Δ |
| | Cover film peel strength [N/50 mm] | | 0.05 | 0.07 | 0.04 | 0.05 | 0.04 | 0.05 | 0.02 |
| | Cover film peelability | | ○ | ○ | ○ | ○ | ○ | ○ | ○ |
| | Moisture resistance | | ○ | ○ | ○ | ○ | ○ | ○ | ○ |

| | | | Example 8 | Example 9 | Example 10 | Example 11 | Example 12 | Example 13 | Example 14 |
|---|---|---|---|---|---|---|---|---|---|
| | Gas adsorpti on layer | Polymer | 2EHA/AA=9 5/5 | 2EHA/AA=9 5/5 | 2EHA/AA=9 5/5 | 2EHA/AA=9 5/5 | 2EHA/AA=9 5/5 | 2EHA/AA=9 5/5 | 2EHA/AA=9 5/5 |
| | | Cross-linking agent | TETRAD-C | TETRAD-C | TETRAD-C | TETRAD-C | TETRAD-C | TETRAD-C | TETRAD-C |
| | | Cross-linking agent blending amount | 1 part by weight | 1 part by weight | 1 part by weight | 1 part by weight | 1 part by weight | 1 part by weight | 1 part by weight |
| | | Particles | Molecular Sieve 3A-B | Molecular Sieve 3A-B | Molecular Sieve 3A-B | Molecular Sieve 3A-B | Molecular Sieve 3A-B | Molecular Sieve 3A-B | Molecular Sieve 3A-B |
| | | Particle blending amount | 900 parts by weight | 900 parts by weight | 900 parts by weight | 900 parts by weight | 900 parts by weight | 900 parts by weight | 900 parts by weight |
| Gas adsorption sheet | | Particle surface treatment (coupling agent) | KBM4803 | KBM4803 | KBM4803 | KBM4803 | - | KBM4803 | KBM4803 |
| | | Coupling agent blending amount | 4 wt% | 4 wt% | 4 wt% | 4 wt% | - | 4 wt% | 4 wt% |
| | | Gas adsorption layer thickness | 80 µm | 80 µm | 80 µm | 80 µm | 80 µm | 80 µm | 80 µm |
| | Intermed iate layer | Polymer | 2EHA/AA=9 5/5 | 2EHA/AA=9 5/5 | 2EHA/AA=9 5/5 | 2EHA/AA=9 5/5 | 2EHA/AA=9 5/5 | 2EHA/AA=9 5/5 | 2EHA/AA=9 5/5 |
| | | Cross-linking agent | D101E | D101E | D101E | D101E | D101E | D101E | D101E |
| | | Cross-linking agent blending amount | 3 parts by weight | 3 parts by weight | 3 parts by weight | 3 parts by weight | 3 parts by weight | 3 parts by weight | 3 parts by weight |
| | | Intermediate | 3 µm | 3 µm | 3 µm | 10 µm | 10 µm | 10 µm | 10 µm |
| | | layer thickness | | | | | | | |
| | Heat-resistant base material | | Kapton 100H | Kapton 100H | Kapton 100H | Kapton 100H | Kapton 100H | Kapton 100H | Kapton 100H |
| | Gas adsorption layer strength [N/19 mm] | | 3.6 | 3.6 | 3.6 | 3.6 | 0.5 | 3.6 | 3.6 |
| | Gas adsorption layer adhesiveness | | ○ | ○ | ○ | ○ | ○ | ○ | ○ |
| Cover film | | | A | H | I | J | K | L | M |
| Evaluation | Handleability | | ○ | ○ | ○ | ○ | ○ | ○ | ○ |
| | Heat resistance (cover film) | | ○ | ○ | ○ | ○ | ○ | ○ | ○ |
| | Workability | | ○ | ○ | ○ | ○ | ○ | ○ | ○ |
| | Cover film peel strength [N/50 mm] | | 0.05 | 0.06 | 0.08 | 0.12 | 0.1 | 0.21 | 1.21 |
| | Cover film peelability | | ○ | ○ | ○ | ○ | Δ | Δ | ○ |
| | Moisture resistance | | ○ | ○ | ○ | ○ | ○ | ○ | ○ |

| | | | Example 15 | Example 16 | Example 17 | Example 18 | Example 19 | Comparati ve Example 1 | Comparati ve Example 2 | Comparati ve Example 3 |
|---|---|---|---|---|---|---|---|---|---|---|
| | | Polymer | 2EHA/AA=9 5/5 | 2EHA/AA=9 5/5 | 2EHA/AA=9 5/5 | 2EHA/AA=9 5/5 | 2EHA/AA=9 5/5 | 2EHA/AA=9 5/5 | 2EHA/AA=9 5/5 | 2EHA/AA=9 5/5 |
| | | Cross-linking agent | TETRAD-C | TETRAD-C | TETRAD-C | D101E | TETRAD-C | TETRAD-C | TETRAD-C | TETRAD-C |
| | | Cross-linking agent blending amount | 1 part by weight | 1 part by weight | 1 part by weight | 3 parts by weight | 1 part by weight | 1 part by weight | 1 part by weight | 1 part by weight |
| | | Particles | Molecular Sieve 3A-B | Molecular Sieve 3A-B | Molecular Sieve 3A-B | Molecular Sieve 3A-B | Molecular Sieve 3A-B | Molecular Sieve 3A-B | Molecular Sieve 3A-B | Molecular Sieve 3A-B |
| Gas adsorption sheet | Gas adsorpti on layer | Particle blending amount | 900 parts by weight | 900 parts by weight | 900 parts by weight | 900 parts by weight | 900 parts by weight | 900 parts by weight | 900 parts by weight | 900 parts by weight |
| | | Particle surface treatment (coupling agent) | KBM4803 | KBM4803 | KBM4803 | KBM4803 | KBM4803 | - | - | KBM4803 |
| | | Coupling agent blending amount | 4 wt% | 4 wt% | 4 wt% | 4 wt% | 4 wt% | - | - | 4 wt% |
| | | Gas adsorption layer thickness | 80 µm | 80 µm | 80 µm | 80 µm | 80 µm | 80 µm | 80 µm | 80 µm |
| | Intermed iate layer | Polymer | 2EHA/AA=9 5/5 | 2EHA/AA=9 5/5 | 2EHA/AA=9 5/5 | 2EHA/AA=9 5/5 | 2EHA/AA=9 5/5 | - | 2EHA/AA=9 5/5 | 2EHA/AA=9 5/5 |
| | | Cross-linking agent | D101E | D101E | D101E | D101E | D101E | - | D101E | D101E |
| | | Cross-linking agent blending amount | 3 parts by weight | 3 parts by weight | 3 parts by weight | 3 parts by weight | 3 parts by weight | - | 3 parts by weight | 3 parts by weight |
| | | Intermediate layer thickness | 10 µm | 10 µm | 3 µm | 3 µm | 3 µm | | 10 µm | 10 µm |
| | Heat-resistant base material | | Kapton 100H | Kapton 100H | Kapton 100H | Kapton 100H | Kapton 100H | Kapton 100H | Kapton 100H | Kapton 100H |
| | Gas adsorption layer strength [N/19 mm] | | 3.6 | 3.6 | 3.6 | 1.8 | 3.6 | 0.1 | 0.5 | 3.6 |
| | Gas adsorption layer adhesiveness | | ○ | ○ | ○ | ○ | ○ | × | ○ | ○ |
| Cover film | | | N | ○ | P | C | Q | - | - | - |
| Evaluation | Handleability | | ○ | ○ | ○ | ○ | × | × | ○ | ○ |
| | Heat resistance (cover film) | | ○ | ○ | × | ○ | ○ | - | - | - |
| | Workability | | ○ | ○ | ○ | ○ | Δ | × | × | ○ |
| | Cover film peel strength [N/50 mm] | | 1.5 | 2.21 | 0.23 | 0.04 | 0.03 | × | - | - |
| | Cover film peelability | | Δ | Δ | ○ | ○ | ○ | - | - | - |
| | Moisture resistance | | ○ | ○ | ○ | ○ | ○ | × | × | × |

### <Evaluation>

The gas adsorption sheet with a cover film obtained in each of Examples and Comparative Examples was subjected to evaluations described below. The results are shown in Table 2.

### (1) Cover Film Peel Strength

The gas adsorption sheet with a cover film was dried under a reduced pressure of -100 kPa at 110°C for 3 hours. After that, the cover film was peeled off from the gas adsorption sheet with a cover film, and the peel strength was measured.
Test speed: 300 mm/min
Peel angle: 180°
Measurement temperature: 25°C

### (2) Cover Film Peelability (Peelability after Drying)

The failure mode in the evaluation (1) was evaluated.
∘: The cover film was peelable at an interface between the cover film and the gas adsorption layer.
Δ: The surface layer of the gas adsorption layer was transferred to the cover film side.
×: The entire gas adsorption layer was transferred to the cover film side.

### (3) Gas Adsorption Layer Strength

The gas adsorption sheet with a cover film was dried under a reduced pressure of -100 kPa at 110°C for 3 hours. After that, the cover film was peeled off from the gas adsorption sheet with a cover film, and an adhesive tape "No. 31B" manufactured by Nitto Denko Corporation was bonded to the exposed surface of the gas adsorption layer. The peel strength was measured, and the resultant value was evaluated as the gas adsorption layer strength.

Bonding conditions: bonding the adhesive tape by 1 pass back and forth with a 2 kg roller under an environment of 25°C
Test speed: 300 mm/min
Peel angle: 180°
Measurement temperature: 25°C

### (4) Gas Adsorption Layer Adhesiveness

The failure mode in the evaluation (3) was evaluated.
∘: Cohesion failure of the gas adsorption layer was observed.
×: Anchoring failure of the gas adsorption layer was observed.

### (5) Cover Film Heat Resistance

The gas adsorption sheet with a cover film was dried under a reduced pressure of -100 kPa at 110°C for 3 hours, and the state of the cover film was evaluated.
o: The gas adsorption layer was not exposed due to lifting, peeling, or shrinking.
×: The gas adsorption layer was exposed due to one of lifting, peeling, and shrinking.

### (6) Workability

The gas adsorption sheet with a cover film was subjected to punching processing with a cutting die (Thomson blade, size: 5 mm×20 mm, blade thickness: 0.7 mm, R: 0.2), and the state of the gas adsorption sheet after the punching was evaluated.
∘: No chipping of the gas adsorption layer was observed.
Δ: No chipping of the gas adsorption layer was observed, but lifting and peeling of the cover film were observed.
×: Chipping of the gas adsorption layer was observed.

### (7) Moisture Resistance

The gas adsorption sheet with a cover film was dried under a reduced pressure of -100 kPa at 110°C for 3 hours, and was stored in a dry room at a dew point temperature of -50°C and a room temperature of 23°C. A change in moisture content by moisture absorption was measured.
∘: A moisture content of 1% or less was maintained for 8 hours or more in a dry room.
×: A moisture content of 1% or less could not be maintained for 8 hours in a dry room.
• Moisture content measurement method (Karl Fischer method)
• Moisture meter: manufactured by HIRANUMA Co., Ltd., AQ-2100

### (8) Cover Film Pressure-sensitive Adhesive Strength

The resultant cover film was bonded to a SUS 304BA plate. The peel strength required for peeling off the cover film therefrom was measured, and the value was evaluated as a cover film pressure-sensitive adhesive strength.

Bonding conditions: bonding the cover film by 1 pass back and forth with a 2 kg roller under an environment of 25°C
Test speed: 300 mm/min
Peel angle: 180°
Measurement temperature: 25°C

### (9) Handleability

Troubles occurring during winding of the gas adsorption sheet with a cover film around a 3-inch winding core formed of an ABS resin were evaluated.
○: There were no troubles.
×: Chipping of the gas adsorption layer during transportation was observed, or lifting of the cover film was observed after the winding.

### Industrial Applicability

The gas adsorption sheet of the present invention can be suitably used as a gas adsorption material for a nonaqueous secondary battery.

### Reference Signs List

10 heat-resistant base material
20 gas adsorption layer
30 intermediate layer
100 gas adsorption sheet with cover film

## Claims

1. A gas adsorption sheet for a secondary battery with a cover film, comprising:
a gas adsorption sheet for a secondary battery including a heat-resistant base material, and a gas adsorption layer arranged on at least one side of the heat-resistant base material; and
a cover film arranged on the gas adsorption layer on a side opposite to the heat-resistant base material,
wherein the gas adsorption layer contains:
a binder resin; and
gas adsorbent particles each of which is formed of an inorganic porous material having pores, and is capable of adsorbing a gas.

2. The gas adsorption sheet for a secondary battery with a cover film according to claim 1, further comprising an intermediate layer arranged between the heat-resistant base material and the gas adsorption layer.

3. The gas adsorption sheet for a secondary battery with a cover film according to claim 1, wherein the gas adsorbent particles each have a surface-treated surface treated with silicone.

4. The gas adsorption sheet for a secondary battery with a cover film according to claim 3, wherein the silicone has an ethoxysilane group or a methoxysilane group.

5. The gas adsorption sheet for a secondary battery with a cover film according to claim 4, wherein the silicone serves as a silane coupling agent having an epoxy group or an amino group.

6. The gas adsorption sheet for a secondary battery with a cover film according to claim 1, wherein the binder resin is an acrylic resin.

7. The gas adsorption sheet for a secondary battery with a cover film according to claim 6,
wherein the binder resin contains a constituent unit derived from a (meth)acrylic acid alkyl ester, and
wherein the (meth)acrylic acid alkyl ester has a linear or branched alkyl group having 4 to 12 carbon atoms.

8. The gas adsorption sheet for a secondary battery with a cover film according to claim 1, wherein the binder resin is a butyl rubber, an isoprene rubber, a polyisobutylene rubber, an ethylene propylene rubber, or a silicone-based resin.

9. The gas adsorption sheet for a secondary battery with a cover film according to claim 1, wherein a content of the gas adsorbent particles is from 10 parts by weight to 90 parts by weight with respect to 100 parts by weight of the gas adsorption sheet for a secondary battery.

10. The gas adsorption sheet for a secondary battery with a cover film according to claim 1, wherein a material for forming the heat-resistant base material is polyamide imide, polyetherimide, polyphenylene sulfide, polyethylene naphthalate, polyimide, or polyetheretherketone.

11. The gas adsorption sheet for a secondary battery with a cover film according to claim 1, wherein the cover film includes a base material and a pressure-sensitive adhesive layer arranged on at least one side of the base material.

12. The gas adsorption sheet for a secondary battery with a cover film according to claim 11,
wherein the pressure-sensitive adhesive layer is formed of a pressure-sensitive adhesive containing a base polymer, and
wherein a content of a constituent unit derived from an organic acid monomer in the base polymer is 0.5 part by weight or less with respect to 100 parts by weight of the base polymer.

13. The gas adsorption sheet for a secondary battery with a cover film according to claim 11, wherein the cover film is peelable.
